# EUROPEAN PATENT APPLICATION

(11) **EP 2 523 154 A1**
(43) Date of publication of application: **14.11.2012**
(21) Application number: 11166022.1
(22) Date of filing: 13.05.2011
(51) Int. Cl.: G06Q 20/00

(54) **Mobile billing method and system using ars**

(71) Applicant: KCP Co., Ltd, Seoul 152-050 (KR)
(72) Inventor: Kim, Jeong Il, 152-050, Seoul (KR); Kim, Yong Sung, 442-827, Gyeonggi-do (KR)
(74) Representative: Fleck, Hermann-Josef

(57) **Abstract**

Disclosed herein is a mobile billing method using an automatic response service (ARS) including (a) receiving an ARS connection number, a payer's number and a mobile terminal number from an ARS server, (b) identifying a franchisee server based on the ARS connection number and requesting billing information based on the payer's number from the franchisee server, (c) transmitting the billing information to the ARS server and receiving a request for authentication and billing from the ARS server, and (d) requesting authentication and billing approval from a billing server, receiving a result of the authentication and billing approval from the billing server and transmitting the result of the authentication and billing approval to the ARS server.

## Description

### BACKGROUND OF THE INVENTION

### Field of the Invention

The present invention relates to a mobile billing method and system using an automatic response service (ARS), and, more particularly, to a mobile billing method and system using an ARS that enable a user to receive an announcement regarding billing information and to pay a bill through user's placement of a telephone call using an ARS number at an initial stage and one-time input of a payer's number.

### Description of the Related Art

In recent years, various billing means, as substitutes for cash, have been implemented. This has been possible by preparation of environments, such as the Internet, through which an electronic commercial transaction is possible, popularization of automated teller machines (ATMs) having various functions, popularization of mobile communication terminals and activation of financial transaction using the same.

An example of a substitute for cash is electronic money, generally used on the Internet. However, card billing, small-scale billing based on a mobile phone charge and account transfer are used as frequently as cash and electronic money. In particular, such account transfer is possible all day using ATMs, mobile phones, the Internet or the like without visiting banks. Such card billing, small-scale billing and account transfer are increasingly used online stores and online services on the Internet are available.

A billing method using mobile phones has an advantage in that payment of a bill is possible without cash or credit cards since persons who do not carry such cash or credit cards generally carry their mobile phones.

On the other hand, the billing method using mobile phones has problems in that additional application programs and a certificate of authentication must be installed in mobile phones, a large amount of information must be input on a small screen, whereby it is difficult for the elderly, who are not good at use of a keypad or persons with poor vision to use the billing method using mobile phones.

### SUMMARY OF THE INVENTION

Therefore, the present invention has been made in view of the above problems, and it is an object of the present invention to provide a mobile billing method using an ARS that enables a user to receive an announcement regarding billing information and to pay a bill through user's placement of a telephone call using an ARS number at an initial stage and one-time input of a payer's number.

It is another object of the present invention to provide a mobile billing system using an ARS that enables a user to receive an announcement regarding billing information and to pay a bill through user's placement of a telephone call using an ARS number at an initial stage and one-time input of a payer's number.

In accordance with a first aspect of the present invention, the above and other objects can be accomplished by the provision of a mobile billing method using an automatic response service (ARS) including (a) receiving an ARS connection number, a payer's number and a mobile terminal number from an ARS server, (b) identifying a franchisee server based on the ARS connection number and requesting billing information based on the payer's number from the franchisee server, (c) transmitting the billing information to the ARS server and receiving a request for authentication and billing from the ARS server, and (d) requesting authentication and billing approval from a billing server, receiving a result of the authentication and billing approval from the billing server and transmitting the result of the authentication and billing approval to the ARS server.

In accordance with a second aspect of the present invention, there is provided a mobile billing method using an ARS including (a) receiving a payer's number and a mobile terminal number from an ARS server, (b) requesting billing information based on the payer's number from a franchisee server, (c) transmitting the billing information to the ARS server and receiving a request for authentication and billing from the ARS server, and (d) requesting authentication and billing approval from a billing server, receiving a result of the authentication and billing approval from the billing server and transmitting the result of the authentication and billing approval to the ARS server.

In the mobile billing method according to the first aspect or the second aspect of the present invention, step (c) may include receiving an inherent identification number of a buyer from the ARS server and the ARS server requests the inherent identification number of the buyer to be input to the mobile terminal and receives the inherent identification number of the buyer input using the mobile terminal.

The mobile billing method according to the first aspect or the second aspect of the present invention may further include receiving a password input using the mobile terminal.

In accordance with a third aspect of the present invention, there is provided a mobile billing method using an ARS including (a) receiving a payer's number input using a mobile terminal of a buyer having performed an ARS connection, (b) transmitting an ARS number, the payer's number and a mobile terminal number of the buyer to a billing relay server, (c) receiving billing information of the buyer from the billing relay server and transmitting an ARS announcement to the mobile terminal, (d) receiving a request for billing from the mobile terminal, and (e) requesting authentication and billing approval from a billing relay server, receiving a result of the authentication and billing approval from the billing relay server and transmitting an ARS announcement to the mobile terminal.

In accordance with a fourth aspect of the present invention, there is provided a mobile billing method using an ARS including (a) receiving a payer's number input using a mobile terminal of a buyer having performed an ARS connection, (b) transmitting the payer's number and a mobile terminal number of the buyer to a billing relay server, (c) receiving billing information of the buyer from the billing relay server and transmitting an ARS announcement to the mobile terminal, (d) receiving a request for billing from the mobile terminal, and (e) requesting authentication and billing approval from a billing relay server, receiving a result of the authentication and billing approval from the billing relay server and transmitting an ARS announcement to the mobile terminal.

In the mobile billing method according to the fourth aspect of the present invention, step (d) may include requesting an inherent identification number of the buyer to be input to the mobile terminal irrespective of the request for billing or according to the request for billing and receiving the inherent identification number of the buyer input using the mobile terminal.

In the mobile billing method according to the first aspect of the present invention, the billing server may include a server managed by a credit card company, a mobile communication company or a financial institution that performs authentication and billing approval business.

In accordance with a fifth aspect of the present invention, there is provided a mobile billing system using an ARS including an ARS server to receive a payer's number and a request for billing input using a mobile terminal through an ARS connection and to announce billing information and a result of billing to the mobile terminal and a billing relay server to receive at least the payer's number, a mobile terminal number and a request for authentication and billing and to transmit billing information received from a franchisee server and a result of authentication and billing approval received from a billing server to the ARS server.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram illustrating the construction of an automatic response service (ARS) billing system according to the present invention;
FIG. 2A is a process view illustrating a mobile billing method using an ARS according to a first embodiment of the present invention;
FIG. 2B is a process view illustrating a mobile billing method using an ARS according to a second embodiment of the present invention; and
FIG. 3 is a flow chart illustrating an embodiment of a process of a buyer paying a bill through an ARS using a mobile terminal according to the present invention.

### DETAILED DESCRIPTION OF THE INVENTION

In accordance with a first embodiment of the present invention, a mobile billing method using an automatic response service (ARS) includes (a) receiving an ARS connection number, a payer's number and a mobile terminal number from an ARS server, (b) identifying a franchisee server based on the ARS connection number and requesting billing information based on the payer's number from the franchisee server, (c) transmitting the billing information to the ARS server and receiving a request for authentication and billing from the ARS server, and (d) requesting authentication and billing approval from a billing server, receiving a result of the authentication and billing approval from the billing server and transmitting the result of the authentication and billing approval to the ARS server.

In accordance with a second embodiment of the present invention, a mobile billing method using an ARS includes (a) receiving a payer's number and a mobile terminal number from an ARS server, (b) requesting billing information based on the payer's number from a franchisee server, (c) transmitting the billing information to the ARS server and receiving a request for authentication and billing from the ARS server, and (d) requesting authentication and billing approval from a billing server, receiving a result of the authentication and billing approval from the billing server and transmitting the result of the authentication and billing approval to the ARS server.

Hereinafter, preferred embodiments of the present invention will be described in more detail with reference to the accompanying drawings.

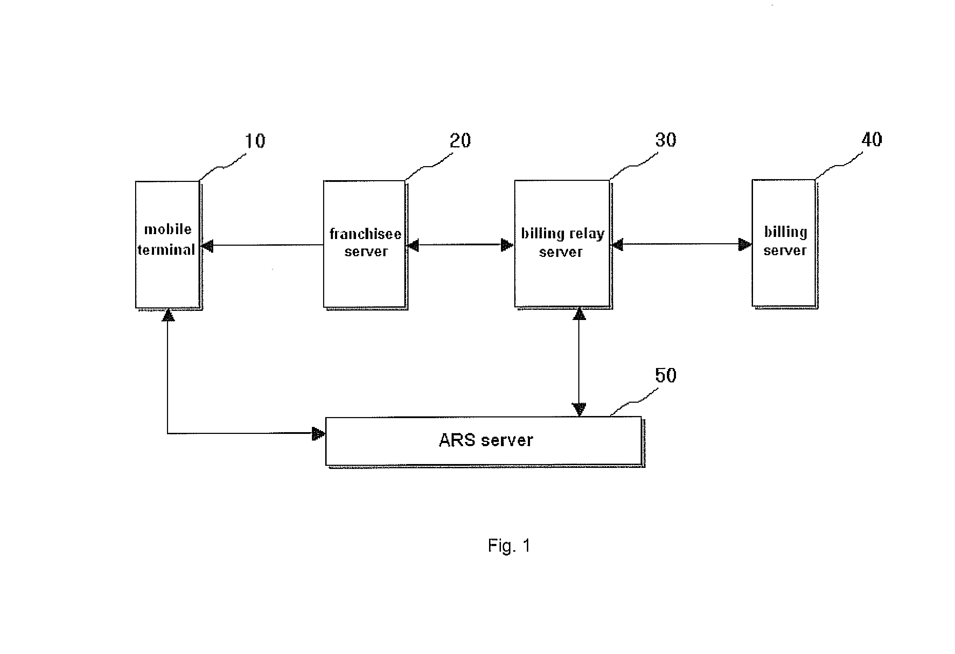

FIG. 1 is a block diagram illustrating the construction of a mobile billing system using an ARS according to the present invention. The mobile billing system includes a mobile terminal 10, a franchisee server 20, a billing relay server 30, a billing server 40 and an ARS server 50.

The mobile terminal 10 is a terminal owned by a buyer who wishes to pay an electronic bill through an ARS. Generally, the mobile terminal 10 is a terminal owned by a person who receives a notice of payment, such as a giro, having a payer's number or a giro number stated therein from franchisees.

The franchisee server 20 is a server managed by a shopping mall business owner who exhibits and sells goods for buyers online or offline. A franchisee managing the franchisee server 20 issues a notice of buying a good to the owner of the mobile terminal 10 who has been bought the good.

The billing relay server 30 is a server normally managed by a payment gateway (PG) company that performs electronic billing over the Internet. The billing relay server 30 is connected between the franchisee server 20 and the billing server 40 via a network to perform a process related to electronic billing. Also, the billing relay server 30 relays a billing process between the mobile terminal 10 and the billing server 40 via the ARS server 50.

The billing server 40 is a server managed by a credit card company, a mobile communication company or a financial institution that performs authentication and billing approval business. The billing server 40 performs authentication and billing approval together with the billing relay server 30.

The ARS server 50 performs an interface function to provide information necessary for billing and the result of billing between the mobile terminal 10 of the buyer and the billing relay server 30 as voice information to improve billing convenience. In this embodiment of the present invention, it is possible to provide an ARS service using only the single ARS server 50 for a plurality of billing institutions or billing relay institutions that do not have independent ARS systems.

The mobile billing system using the ARS with the above-stated construction according to this embodiment of the present invention requires various physical facilities, such as base stations, relay stations, control stations and communication networks, for mobile communication in addition to the above-mentioned components. The above-mentioned facilities are well known, and therefore, a detailed description thereof will be omitted. However, those skilled in the art will appreciate that any necessary well-known facilities may be included in the mobile billing system according to the present invention in order to physically realize the mobile billing system.

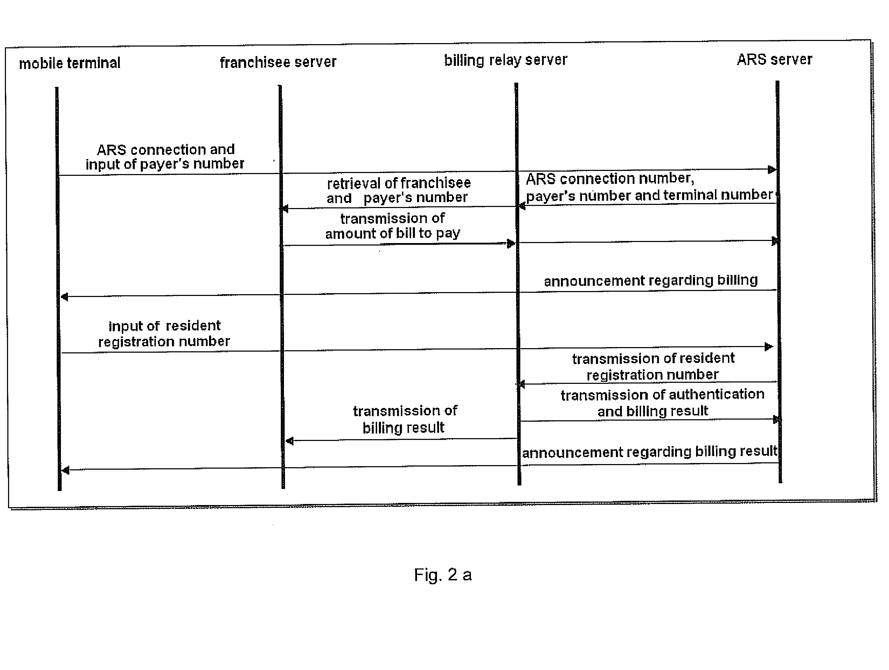

FIG. 2A is a process view illustrating a mobile billing method using an ARS according to a first embodiment of the present invention.

First, a franchisee who manages the franchisee server 20 transmits a notice of payment to a buyer who has bought a good or a service to request the buyer to pay for the good or the service. At this time, the notice of payment may be transmitted in the form of a notice of payment by mail (giro). Alternatively, the notice of payment may be transmitted to a computer or a mobile terminal of the buyer through electronic mail or short message service (SMS) (hereinafter, the term 'notice of payment' will be used consistently).

The notice of payment preferably includes an ARS connection number, with which a telephone call can be placed using the mobile terminal 10, a payer's number or a giro number. At this time, the mobile terminal 10 is basically a terminal owned by the buyer who has directly bought the good or the service. However, it is not necessary for the mobile terminal 10 to be limited to the terminal owned by the buyer. Consequently, the mobile terminal 10 may be a mobile terminal owned by a person who will pay for the good or the service in place of the buyer (hereinafter, the person who owns the terminal will be consistently referred to as the buyer). The ARS connection number transmitted to the buyer is preferably an inherent connection number given to the franchisee.

The buyer inputs the ARS connection number stated in the notice of payment into the mobile terminal 10 to access the ARS server 50. At this time, it is possible for the buyer to input the payer's number or the giro number (hereinafter, the term `the payer's number' will be used consistently) in addition to the ARS connection number according to an announcement from the ARS server 50. Alternatively, it is possible for the buyer to input the payer's number as well as the ARS connection number from the beginning.

The ARS server 50 obtains the ARS connection number and the payer's number received from the mobile terminal 10, preferably, together with the mobile terminal number (for example, a calling identity delivery (CID) service may be used to obtain the numbers) and transmits the ARS connection number, the payer's number and the mobile terminal number to the billing relay server 30.

Upon receipt of the ARS connection number, the payer's number and the mobile terminal number, the billing relay server 30 requests the franchisee server 20 matched based on the ARS connection number to retrieve the payer's number, confirms the payer's number from the franchisee server 20 and receives billing information including the amount of payment notified to the buyer.

The billing relay server 30 transmits the billing information received from the franchisee server 20 to the ARS server 50. Upon receipt of the billing information, the ARS server 50 transmits an announcement containing the billing information to the mobile terminal 10. At this time, the buyer may have to input an inherent identification number for buyer authentication. The inherent identification number may include all numbers that can be used to authenticate the buyer. For example, a resident registration number, a credit card number, a check card number, etc. may be used as the inherent identification number.

Upon receipt of the resident registration number from the mobile terminal 10, the ARS server 50 requests the billing relay server 30 to perform authentication of the buyer and billing.

The billing relay server 30 requests the billing server 40 for the authentication and the billing approval. At this time, when the buyer requests the bill to be paid as a mobile phone charge, the billing server 40 is a server managed by a mobile communication company. When the buyer requests the billing using a credit card, the billing server 40 is a server managed by a credit card company (including a case in which a server managed by a value-added network (VAN) company relays the billing). When the buyer requests the billing through account transfer, the billing server 40 is a server managed by a financial institution. This may be achieved by the buyer's input request to select a billing method through the announcement from the ARS server 50 at the previous step.

Upon being requested for the authentication of the buyer and the billing approval from the billing relay server 30, the billing server 40 transmits the result of the authentication and the billing approval based on the request to the billing relay server 30. Upon receipt of the result of the authentication and the billing approval, the billing relay server 30 transmits the result of the authentication and the billing approval to the franchisee server 20 and the ARS server 50.

The ARS server 50 transmits the billing result to the mobile terminal 10 through an announcement. As a result, it is possible for the buyer to easily pay the electronic bill through the ARS by inputting a minimum of information, such as the ARS connection number, the payer's number and the resident registration number.

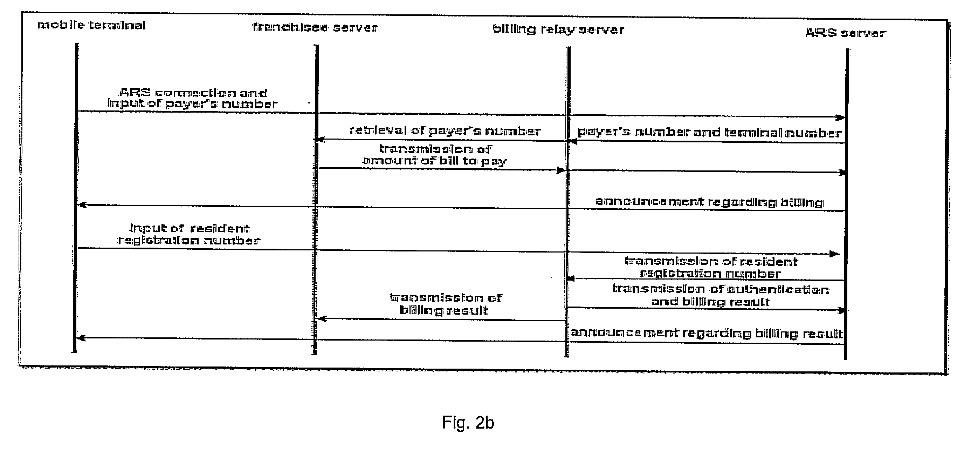

FIG. 2B is a process view illustrating a mobile billing method using an ARS according to a second embodiment of the present invention.

First, a franchisee who manages the franchisee server 20 transmits a notice of payment to a buyer who has bought a good or a service to request the buyer to pay for the good or the service. At this time, the notice of payment may be transmitted in the form of a notice of payment by mail (giro). Alternatively, the notice of payment may be transmitted to a computer or a mobile terminal of the buyer through electronic mail or SMS (hereinafter, the term 'notice of payment' will be used consistently).

The notice of payment preferably includes an ARS connection number, with which a telephone call can be placed using the mobile terminal 10, a payer's number or a giro number. At this time, the mobile terminal 10 is basically a terminal owned by the buyer who has directly bought the good or the service. However, it is not necessary for the mobile terminal 10 to be limited to the terminal owned by the buyer. Consequently, the mobile terminal 10 may be a mobile terminal owned by a person who will pay for the good or the service in place of the buyer (hereinafter, the person who owns the terminal will be consistently referred to as the buyer). The ARS connection number transmitted to the buyer is preferably a single representative ARS connection number used by the ARS server.

The buyer inputs the ARS connection number stated in the notice of payment into the mobile terminal 10 to access the ARS server 50. At this time, it is possible for the buyer to input the payer's number or the giro number (hereinafter, the term 'the payer's number' will be used consistently) in addition to the ARS connection number according to an announcement from the ARS server 50. Alternatively, it is possible for the buyer to input the payer's number as well as the ARS connection number from the beginning.

The ARS server 50 obtains the payer's number received from the mobile terminal 10, preferably, together with the mobile terminal number (for example, a CID service may be used to obtain the numbers) and transmits the payer's number and the mobile terminal number to the billing relay server 30.

Upon receipt of the payer's number and the mobile terminal number, the billing relay server 30, requests the franchisee server 20 matched based on the ARS connection number to retrieve the payer's number, confirms the payer's number from the franchisee server 20 and receives billing information including the amount of payment notified to the buyer.

The billing relay server 30 transmits the billing information received from the franchisee server 20 to the ARS server 50. Upon receipt of the billing information, the ARS server 50 transmits an announcement containing the billing information to the mobile terminal 10. At this time, the buyer may have to input an inherent identification number for buyer authentication. The inherent identification number may include all numbers that can be used to authenticate the buyer. For example, a resident registration number, a credit card number, a check card number, etc. may be used as the inherent identification number.

Upon receipt of the resident registration number from the mobile terminal 10, the ARS server 50 requests the billing relay server 30 to perform authentication of the buyer and billing.

The billing relay server 30 requests the billing server 40 for the authentication and the billing approval. At this time, when the buyer requests the bill to be paid as a mobile phone charge, the billing server 40 is a server managed by a mobile communication company. When the buyer requests the billing using a credit card, the billing server 40 is a server managed by a credit card company (including a case in which a server managed by a VAN company relays the billing). When the buyer requests the billing through account transfer, the billing server 40 is a server managed by a financial institution. This may be achieved by the buyer's input request to select a billing method through the announcement from the ARS server 50 at the previous step.

Upon being requested for the authentication of the buyer and the billing approval from the billing relay server 30, the billing server 40 transmits the result of the authentication and the billing approval based on the request to the billing relay server 30. Upon receipt of the result of the authentication and the billing approval, the billing relay server 30 transmits the result of the authentication and the billing approval to the franchisee server 20 and the ARS server 50.

The ARS server 50 transmits the billing result to the mobile terminal 10 through an announcement. As a result, it is possible for the buyer to easily pay the electronic bill through the ARS by inputting a minimum of information, such as the ARS connection number, the payer's number and the resident registration number.

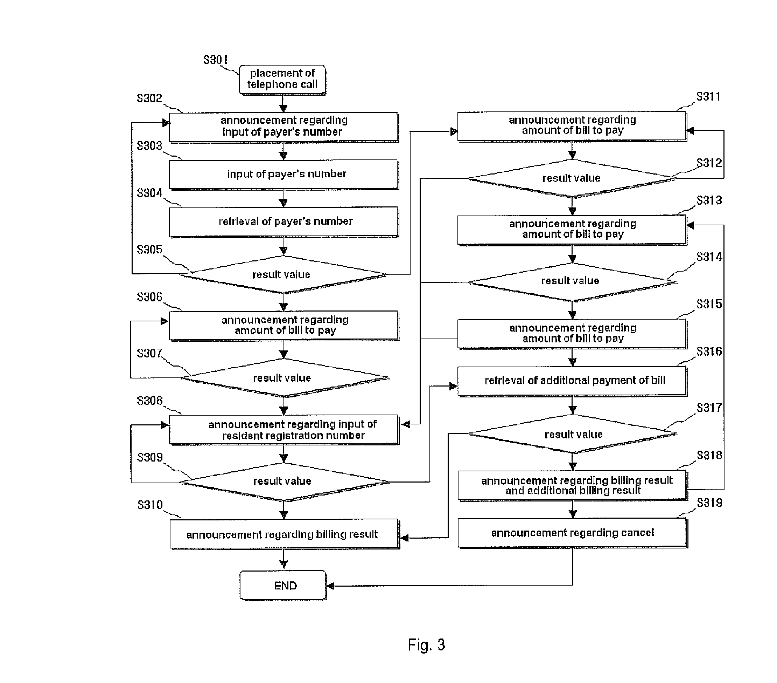

FIG. 3 is a flow chart illustrating an embodiment of a process of a buyer paying a bill through an ARS using a mobile terminal according to the present invention.

The buyer inputs an ARS connection number stated in a notice of payment using the mobile terminal 10 to place a telephone call (S301). The ARS server 50 transmits a first announcement to the mobile terminal 10.
- An example of the first announcement: `Hello! This is a mobile phone billing service provided by a franchisee named ○○○.'

Subsequently, the ARS server 50 transmits a second announcement to request the buyer to input a payer's number to the mobile terminal 10 (S302).
- An example of the second announcement: 'Please input a payer's number of XX digits stated in a notice of payment.'

The buyer inputs the payer's number into the mobile terminal 10 according to the second announcement from the ARS server 50 (S303).

The ARS server 50 transmits a third announcement to the mobile terminal 10 and retrieves the payer's number (S304).
- An example of the third announcement: `A bill to pay is being retrieved. Please wait a moment.'

The ARS server 50 transmits the ARS connection number (it is not necessary to transmit the ARS connection number in the second embodiment of the present invention), the payer' s number and a mobile terminal number acquired by a CID service to the billing relay server 30. When there is a bill for the buyer to pay, billing information is received from the billing relay server 30 (S305), and, when the billing information includes the bill for the buyer to pay, a fourth announcement is transmitted to the mobile terminal 10 (S306).
- An example of the fourth announcement: 'The total amount of the bill for △△△ to pay is □□□ Won. Please press button number 1 for payment of the bill, button number 2 for hearing the message again and button number 9 for communication with a customer service representative.'

Meanwhile, when there is a plurality of billing items to be paid by the user, it is necessary for the buyer to be notified of the details of such billing items. In this embodiment of the present invention, therefore, the fourth announcement may further include an announcement to confirm the details (for example, 'Please press button number 3 for confirmation of the details.') (S311).

On the other hand, when there is no bill for the buyer to pay (S305), the ARS server 50 transmits a fifth announcement to the mobile terminal 10, and, when the payer's number is not correct, the ARS server 50 transmits a sixth announcement to the mobile terminal 10.
- An example of the fifth announcement: 'There is no bill to pay. Please press button number 9 for communication with a customer service representative.'
- An example of the sixth announcement: 'The payer's number is not correct. Please confirm and input the payer's number again. Please press button number 9 for communication with a customer service representative.'

When the buyer presses button number 1 according to the fourth announcement (S307), the ARS server 50 transmits a seventh announcement to request the buyer to input a resident registration number of a payer to the mobile terminal 10 (S308).
- An example of the seventh announcement: 'Please input a resident registration number of 13 digits assigned to the mobile phone owner for payment of the bill using the mobile phone. If you do not know your resident registration number, please confirm your resident registration number and call again.'

When the input resident registration number coincides with a resident registration number of a subscriber managed by the billing server 40 as a database (DB), and billing approval has been performed by the billing server 40 (S309), the ARS server 50 transmits the billing result received from the billing relay server 30 to the mobile terminal 10 as an eighth announcement (S310).
- An example of the eighth announcement: 'Payment of the bill has been completed. Thank you.'

On the other hand, when the input resident registration number does not coincide with a resident registration number of a subscriber managed by the billing server 40 as a DB (S309), the ARS server 50 transmits a ninth announcement to the mobile terminal 10. Also, when the input resident registration number coincides with the resident registration number of the subscriber but billing approval has not been performed (S309), the ARS server 50 transmits a tenth announcement to the mobile terminal 10, and the procedure returns to Step S308.
- An example of the ninth announcement: 'The input resident registration number does not coincide with a resident registration number of a subscriber. Please confirm and input your resident registration number again. Please press button number 9 for communication with a customer service representative.'
- An example of the tenth announcement: 'The bill has not been paid due to an error (an error code). Please press button number 9 for communication with a customer service representative.'

When, at Step S305, there is a plurality of billing items to be paid by the buyer, the billing information is transmitted to the mobile terminal 10 as an eleventh announcement at Step S311 as previously described.
- An example of the eleventh announcement: 'The total amount of the bill for △△△ to pay is □□□ Won. Please press button number 1 for payment of the bill, button number 2 for listening to the message again, button number 3 for confirmation of the details and button number 9 for communication with a customer service representative.'

When the buyer presses button number 1 according to the eleventh announcement (S312), the ARS server 50 transmits the seventh announcement to request the buyer to input the resident registration number of the payer to the mobile terminal 10 (S30B).

When the buyer presses button number 3 according to the eleventh announcement (S312), the billing details are transmitted to the mobile terminal 10 as a twelfth announcement at Step S313.
- An example of the twelfth announcement: 'There are [Monthly amount, Good name] [XXX] Won, [Monthly amount, Good name] [XXX] Won, .... Please press button number 1 for batch payment of the bills and button number 2 for individual payment of each bill.'

When the buyer presses button number 1 according to the twelfth announcement (S314), the ARS server 50 transmits the seventh announcement to request the buyer to input the resident registration number of the payer to the mobile terminal 10 (S308).

When the buyer presses button number 2 according to the twelfth announcement (S314), the billing details of an individual item are transmitted to the mobile terminal 10 as a thirteenth announcement at Step S315.
- An example of the thirteenth announcement: 'Please press button number 1 for payment of the bill of [Monthly amount, Good name] [XXX] Won, button number 2 for payment of the bill of [Monthly amount, Good name] [XXX] Won, ....'

When the buyer presses a button number for individual payment of each bill according to the thirteenth announcement, the ARS server 50 transmits the seventh announcement to request the buyer to input the resident registration number of the payer to the mobile terminal 10 (S308).

When, at Step S309, there is a plurality of billing items to be paid by the buyer, the ARS server 50 receives the result of retrieval about whether additional payment of a bill is possible from the billing relay server 30 (S316). When the additional payment of the bill is possible (S317), a fourteenth announcement to request to buyer to select additional payment of the bill is transmitted to the mobile terminal 10 as an eleventh announcement at Step S318.
- An example of the fourteenth announcement: 'Payment of the bill has been completed. There is still a bill to pay. Please press button number 1 for additional payment of the bill and button number 2 for cancel.'

When the buyer selects additional payment of the bill according to the fourteenth announcement (S318), the procedure returns to Step S313. On the other hand, when the buyer selects cancel (S318), a fifteenth announcement to notify cancel of the payment of the bill is transmitted to the mobile terminal 10 (S319).
- An example of the fifteenth announcement: 'Thank you.'

As can be seen from the above-described embodiment, in the ARS billing process according to the present invention, it is possible for the buyer to easily pay the electronic bill through the ARS by inputting a minimum of information, such as the ARS connection number, the payer's number and the resident registration number. Consequently, it is possible, even for the elderly who may have trouble typing, to easily pay bills using mobile terminals.

As is apparent from the above description, according to the present invention, a bill is paid through a mobile terminal of a buyer according to an ARS announcement, and therefore, it is possible for the buyer to receive an announcement regarding billing information and to pay a bill through user's placement of a telephone call using an ARS number at an initial stage and one-time input of a payer's number. Consequently, it is not necessary for the user to input additional information while watching a screen of the mobile terminal. In addition, according to the present invention, it is possible for any business owner who does not manage an additional ARS server to use the mobile billing method using the ARS according to the present invention under permission of an ARS server management company regarding the use of the ARS server.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A mobile billing method using an automatic response service (ARS) comprising:
(a) receiving an ARS connection number, a payer's number and a mobile terminal number from an ARS server;
(b) identifying a franchisee server based on the ARS connection number and requesting billing information based on the payer's number from the franchisee server;
(c) transmitting the billing information to the ARS server and receiving a request for authentication and billing from the ARS server; and
(d) requesting authentication and billing approval from a billing server, receiving a result of the authentication and billing approval from the billing server and transmitting the result of the authentication and billing approval to the ARS server.

2. A mobile billing method using an ARS comprising:
(a) receiving a payer's number and a mobile terminal number from an ARS server;
(b) requesting billing information based on the payer's number from a franchisee server;
(c) transmitting the billing information to the ARS server and receiving a request for authentication and billing from the ARS server; and
(d) requesting authentication and billing approval from a billing server, receiving a result of the authentication and billing approval from the billing server and transmitting the result of the authentication and billing approval to the ARS server.

3. The mobile billing method according to claim 1 or 2, wherein step (c) comprises receiving an inherent identification number of a buyer from the ARS server and wherein the ARS server requests the inherent identification number of the buyer to be input to the mobile terminal and receives the inherent identification number of the buyer input using the mobile terminal.

4. The mobile billing method according to claim 1 or 2, further comprising receiving a password input using the mobile terminal.

5. A mobile billing method using an ARS comprising:
(a) receiving a payer's number input using a mobile terminal of a buyer having performed an ARS connection;
(b) transmitting an ARS number, the payer's number and a mobile terminal number of the buyer to a billing relay server;
(c) receiving billing information of the buyer from the billing relay server and transmitting an ARS announcement to the mobile terminal;
(d) receiving a request for billing from the mobile terminal; and
(e) requesting authentication and billing approval from a billing relay server, receiving a result of the authentication and billing approval from the billing relay server and transmitting an ARS announcement to the mobile terminal.

6. A mobile billing method using an ARS comprising:
(a) receiving a payer's number input using a mobile terminal of a buyer having performed an ARS connection;
(b) transmitting the payer's number and a mobile terminal number of the buyer to a billing relay server;
(c) receiving billing information of the buyer from the billing relay server and transmitting an ARS announcement to the mobile terminal;
(d) receiving a request for billing from the mobile terminal; and
(e) requesting authentication and billing approval from a billing relay server, receiving a result of the authentication and billing approval from the billing relay server and transmitting an ARS announcement to the mobile terminal.

7. The mobile billing method according to claim 6, wherein step (d) comprises requesting an inherent identification number of the buyer to be input to the mobile terminal irrespective of the request for billing or according to the request for billing and receiving the inherent identification number of the buyer input using the mobile terminal.

8. The mobile billing method according to claim 1, wherein the billing server comprises a server managed by a credit card company, a mobile communication company or a financial institution that performs authentication and billing approval business.

9. A mobile billing system using an ARS comprising:
an ARS server to receive a payer's number and a request for billing input using a mobile terminal through an ARS connection and to announce billing information and a result of billing to the mobile terminal; and
a billing relay server to receive at least the payer's number, a mobile terminal number and a request for authentication and billing and to transmit billing information received from a franchisee server and a result of authentication and billing approval received from a billing server to the ARS server.
